# EUROPÄISCHE PATENTSCHRIFT

(11) **EP 2 374 959 B1**
(45) Veröffentlichungstag und Bekanntmachung des Hinweises auf die Patenterteilung: **22.10.2014**
(21) Anmeldenummer: 10003807.4
(22) Anmeldetag: 09.04.2010
(51) Int. Cl.: E04C 2/04, B32B 7/12, C04B 14/18

(54) **Sandwichelement für den Gebäudebau und Verfahren zur Erstellung eines solchen Sandwichelementes**
Sandwich element for construction and method for producing same
Elément en sandwich pour la construction de bâtiment et procédé de réalisation d'un tel élément en sandwich

(43) Veröffentlichungstag der Anmeldung: 12.10.2011
(73) Patentinhaber: KNAUF AQUAPANEL GmbH, 44147 Dortmund (DE)
(72) Erfinder: Schwiebacher, Werner, 50823 Köln (DE); Lloyd, George, 58640 Iserloh (DE); Kielstein, Harald, 44137 Dortmund (DE)
(74) Vertreter: Berkenbrink, Kai-Oliver

(56) Entgegenhaltungen:
- EP-A1- 0 829 459
- EP-A1- 1 367 189
- WO-A1-2007/090445
- DE-A1-102008 035 007
- DE-U1- 9 318 466
- FR-A1- 2 897 883
- GB-A- 2 060 746
- US-A- 5 256 222
- US-A1- 2008 022 627

## Beschreibung

Die Erfindung betrifft ein Sandwichelement für den Gebäudebau, ein Verfahren zur Erstellung eines solchen Sandwichelementes sowie die Verwendung einer Dämmplatte.

Die heutzutage üblicherweise verwendeten Sandwichelemente für den Gebäudebau bestehen aus einem Kunststoff-Hartschaumkern, der zwischen metallische Deckschichten eingebettet ist. Entsprechend konfektionierte Sandwichelemente werden auch als Sandwichpaneele bezeichnet. Der Kunststoff-Hartschaumkern besteht üblicherweise aus Polyurethan (PUR), der über organische Kleber mit den metallischen Deckschichten verklebt ist.

Entsprechend gestaltete Sandwichelemente haben sich für den Gebäudebau grundsätzlich bewährt, da sie kostengünstig herstellbar sind und eine ausreichende Festigkeit aufweisen.

Nachteilig an der Verwendung der vorbezeichneten Sandwichelemente nach dem Stand der Technik ist jedoch, dass diese überwiegend aus organischen Bestandteilen bestehen, insbesondere in Form des Kunststoff-Hartschaumkerns sowie der organischen Kleber, was im Brandfall problematisch ist.

DE 93 18 466 U1 offenbart Verbundelemente, die unter Verwendung von Faserzementplatten erstellt sind.

Der Erfindung liegt die Aufgabe zugrunde, ein Sandwichelement für den Gebäudebau zur Verfügung zu Stellen, das eine geringere Brennbarkeit als die Sandwichelemente nach dem Stand der Technik aufweist.

Erfindungsgemäß gelöst wird diese Aufgabe durch ein Sandwichelement für den Gebäudebau gemäß Anspruch 1.

Das erfindungsgemäße Sandwichelement ist demnach überwiegend oder auch ausschließlich auf Basis mineralischer Komponenten erstellt und weist demnach keine oder nur geringfügige Anteile an organischen Komponenten auf. Entsprechend weist es eine deutlich geringere Brennbarkeit, also einen deutlich höheren Feuerwiderstand als Sandwichelemente nach dem Stand der Technik auf.

Erfindungsgemäß hat sich herausgestellt, dass auf Grundlage der Erfindung ein Sandwichelement der Bausstoffklasse A1 (insbesondere gemäß DIN EN 13501-1 Ausgabe Januar 2010) erstellbar ist, also ein Sandwichelement der höchsten Feuerwiderstandsklasse.

Die Verwendung von Trockenbauplatten, insbesondere von Trockenbauplatten auf mineralischer Basis, zur Abdeckung der Dämmplatte bei einem erfindungsgemäßen Sandwichelement hat wesentliche Vorteile gegenüber der Verwendung von metallischen Deckschichten zur Abdeckung eines Kunststoff-Hartschaumkerns bei den Sandwichelementen nach dem Stand der Technik. So weisen Trockenbauplatten regelmäßig eine größere Steifigkeit und Festigkeit auf als metallische Deckschichten, so dass das erfindungsgemäße Sandwichelement mit einer höheren Steifigkeit und Festigkeit erstellbar ist als Sandwichelemente nach dem Stand der Technik. Auch weisen Trockenbauplatten regelmäßig einen höheren Feuerwiderstand auf als metallische Deckschichten. Ferner weisen Trockenbauplatten bessere Dämmwerte, insbesondere Schall- und Wärmedämmwerte auf als metallische Deckschichten. Schließlich ist bei dem erfindungsgemäßen Sandwichelement von besonderem Vorteil, dass die Außenflächen des Sandwichelements, die jeweils von einer der Oberflächen der ersten und zweiten Trockenbauplatte gebildet werden, unmittelbar Gebäudeoberflächen bilden können. Die metallischen Oberflächen der metallischen Deckschicht der Sandwichelemente nach dem Stand der Technik konnten hingegen nicht unmittelbar als Gebäudeoberfläche dienen. Vielmehr mussten diese metallischen Deckschichten bei den Sandwichelementen nach dem Stand der Technik durch weitere Baustoffe abgedeckt oder verkleidet werden.

Das erfindungsgemäße Sandwichelement kann insbesondere zur Erstellung von Wänden oder Decken eines Gebäudes verwendet werden. Dabei ist das Sandwichelement als tragendes Element vorgesehen.

Die erste Trockenbauplatte ist dazu bestimmt, dass sie - bei dem in ein Gebäude eingebauten Zustand des erfindungsgemäßen Sandwichelementes - der Gebäudeinnenseite zugewandt ist, während die zweite Trockenbauplatte - wiederum bei dem in ein Gebäude eingebauten Zustand des erfindungsgemäßen Sandwichelementes - dazu bestimmt ist, der Gebäudeaußenseite zugewandt zu sein.

Die erste Trockenbauplatte ist bevorzugt nicht brennbar und kann insbesondere der Baustoffklasse A1 oder A2 entsprechen (insbesondere gemäß DIN EN 13501-1 Ausgabe Januar 2010).

Die erste Trockenbauplatte weist bevorzugt die Form einer rechteckigen oder einer im wesentlichen rechteckigen Platte auf.

Bevorzugt hat die erste Trockenbauplatte eine hohe Steifigkeit und Festigkeit, so dass unter zu Hilfenahme einer entsprechend steifen und festen ersten Trockenbauplatte ein Sandwichelement mit einer hohen Steifigkeit und Festigkeit erstellbar ist.

Insbesondere kann vorgesehen sein, dass die erste Trockenbauplatte gute Schall- und Wärmedämmwerte aufweist. Insbesondere kann vorgesehen sein, dass die Wärmeleitfähigkeit der ersten Trockenbauplatte unter 0,5 W/mK liegt.

Nach einer bevorzugten Ausführungsform ist vorgesehen, dass die freiliegende Hauptoberfläche der ersten Trockenbauplatte, also die nicht mit dem Dämmelement verklebte Hauptoberfläche der ersten Trockenbauplatte, eine Oberfläche zum Auftragen beziehungsweise Anbringen von Putz, Tapeten oder Farbe bietet,

Schließlich ist bevorzugt vorgesehen, dass die erste Trockenbauplatte ein angenehmes Raumklima des durch das betreffende Sandwichelement begrenzten Raumes schafft.

Die erste Trockenbauplatte ist in Form einer Zementbauplatte vorgesehen. Bevorzugt ist eine Zementbauplatte auf Basis von Portlandzement vorgesehen. Es ist vorgesehen, dass die Zementbauplatte im Bereich ihrer Oberfläche durch Glasgittergewebe armiert ist. Hierdurch kann die Steifigkeit und Festigkeit der ersten Trockenbauplatte und damit auch die Steifigkeit und Festigkeit des Sandwichelementes erhöht werden.

Die Zementbauplatte weist einen Biegezugfestigkeit von wenigstens 5 MPa, besonders bevorzugt von wenigstens 8 MPa, auf (insbesondere gemäß DIN EN 12467 Ausgabe Dezember 2006).

Die Wärmeleitfähigkeit der Zementbauplatte liegt bevorzugt unter 0,5 W/mK, besonders bevorzugt unter 0,4 W/mK (insbesondere gemäß EN 12664:2001-05).

Die Zementbauplatte ist bevorzugt nicht brennbar und gehört bevorzugt der Baustoffklasse A1 an (insbesondere gemäß DIN EN 13501-1 Ausgabe Januar 2010), so dass ein erfindungsgemäßes Sandwichelement mit einer ersten Trockenbauplatte in Form einer Zementbauplatte einen besonders hohen Feuerwiderstand aufweist.

Die Dicke der ersten Trockenbauplatte liegt im Bereich von 6 bis 20 mm. Die erste Trockenbauplatte kann bevorzugt eine Dicke im Bereich von 10 bis 15 mm, besonders bevorzugt eine Dicke von 12,5 mm aufweisen.

Erste Trockenbauplatten mit entsprechenden Dicken verleihen dem Sandwichelement bei verhältnismäßig geringem Gewicht gleichzeitig eine hohe Stabilität.

Nach einer besonders bevorzugten Ausführungsform ist vorgesehen, dass die zweite Trockenbauplatte witterungsbeständig ist.

Die Witterungsbeständigkeit der zweiten Trockenbauplatte hat den besonderen Vorteil, dass der Witterungsschutz unmittelbar in das Sandwichelement integriert ist. Das Sandwichelement muss also nicht, so wie dies bei Sandwichelementen nach dem Stand der Technik notwendig ist, eine zusätzliche, witterungsbeständige Schicht erhalten, sondern kann bereits witterungsbeständig sein.

Nach einer bevorzugten Ausführungsform ist vorgesehen, dass die zweite Trockenbauplatte auf ihrer freien Oberfläche, also auf ihrer der Dämmplatte abgewandten, außenliegenden Oberfläche eine Beschichtung und/oder eine Verkleidung aufweist. Hierdurch kann die Witterungsbeständigkeit des Sandwichelementes verbessert oder - insbesondere im Fall einer zweiten Trockenbauplatte, die nicht witterungsbeständig ist - hergestellt werden. Alternativ oder kumulativ kann die freie Oberfläche der ersten Trockenbauplatte auf ihrer freien Oberfläche eine Beschichtung und/oder eine Verkleidung aufweisen. Eine solche Beschichtung oder Verkleidung kann beispielsweise in Form einer oder mehrerer der folgenden Beschichtungen und Verkleidungen vorgesehen sein: Putzbeschichtung, Farbanstrich, Schutzanstrich, Laminierung, Bauplattenverkleidung, Metallplattenverkleidung, Keramikverkleidung, Klinkerverkleidung, Fliesenverkleidung, Ziegelriemchenverkleidung oder Holzverkleidung.

Die zweite Trockenbauplatte kann die Form einer rechteckigen oder im wesentlichen recheckigen Platte aufweisen.

Insbesondere ist vorgesehen, dass die zweite Trockenbauplatte nicht brennbar ist und bevorzugt der Baustoffklasse A1 (insbesondere gemäß DIN EN 13501-1 Ausgabe Januar 2010) zugehört.

Bevorzugt ist vorgesehen, dass die zweite Trockenbauplatte eine hohe Steifigkeit und Festigkeit aufweist und mechanisch hoch belastbar ist.

Bevorzugt ist vorgesehen, dass die zweite Trockenbauplatte gute Schall-und Wärmedämmwerte aufweist.

Erfindungsgemäß ist eine zweite Trockenbauplatte in Form einer Zementbauplatte vorgesehen.

Erfindungsgemäß hat sich herausgestellt, dass durch eine Zementbauplatte eine zweite Trockenbauplatte zur Verfügung gestellt werden kann, die sämtliche der vorstehenden Erfordernisse erfüllen kann.

Bevorzugt ist die zweite Trockenbauplatte in Form einer Zementbauplatte auf Basis von Portlandzement vorgesehen. Nach einer bevorzugten Ausführungsform ist vorgesehen, dass die Zementbauplatte im Bereich ihrer Oberfläche durch Glasgittergewebe armiert ist. Dies verleiht der zweiten Trockenbauplatte und damit auch dem Sandwichelement eine gute Steifigkeit und Biegefestigkeit.

Die Biegefestigkeit der zweiten Trockenbauplatte beträgt bevorzugt mindestens 5 MPa, besonders bevorzugt wenigstens 8 MPa (insbesondere gemäß DIN EN 12467 Ausgabe Dezember 2006).

Die Wärmeleitfähigkeit der zweiten Trockenbauplatte liegt bevorzugt unter 0,5 W/mK, besonders bevorzugt unter 0,4 W/mK (insbesondere gemäß EN 12664:2001-05).

Die Dicke der zweiten Trockenbauplatte liegt bevorzugt im Bereich von 10 bis 30 mm. Eine zweite Trockenbauplatte in Form einer Zementbauplatte kann bevorzugt eine Dicke im Bereich von 6 bis 30 mm, also insbesondere auch im Bereich von 10 bis 15 mm und besonders bevorzugt eine Dicke von 12,5 mm aufweisen.

Die zweite Trockenbauplatte mit entsprechenden Dicken verleihet dem Sandwichelement bei verhältnismäßig geringem Gewicht gleichzeitig eine hohe Stabilität.

Bei der Dämmplatte auf Basis von expandiertem Perlit handelt es sich bevorzugt um eine Dämmplatte auf rein oder zumindest weitgehend mineralischer Basis. Bevorzugt umfasst die Dämmplatte auf Basis von expandiertem Perlit Körner aus expandiertem Perlit, die über ein abgebundenes Bindemittel miteinander verbunden sind beziehungsweise besteht die Dämmplatte auf Basis von expandiertem Perlit aus einem abgebundenen Bindemittel, in das Körner aus expandiertem Perlit eingebettet sind.

Die Körner aus expandiertem Perlit liegen bevorzugt in einer Korngröße ≥ 0,1 mm. Die Kornobergrenze der Körner aus expandiertem Perlit liegt bevorzugt bei 6 mm, wobei die Körner aus expandiertem Perlit bevorzugt in einer Korngröße ≤ 6 mm, besonders bevorzugt in einer Korngröße ≤ 5 mm, ≤ 4mm oder ≤ 3 mm und besonders bevorzugt in einer Konrgröße ≤1,5 vorliegen. Besonders bevorzugt liegen die Körner aus expandiertem Perlit ausschließlich in einer Körung im Bereich von 0,1 bis 1,5 mm vor.

Die Körner aus expandiertem Perlit können bevorzugt hydrophobiert sein. Beispielsweise können die Körner aus expandiertem Perlit eine Vorhydrophobierung aus einem Hydrophobierungsmittel aufweisen, das auf die Oberfläche der Körner aus expandiertem Perlit aufgetragen ist. Entsprechend bereits vorhydrophobierte Körner aus expandiertem Perlit werden anschließend mit dem Bindemittel und gegebenenfalls weiteren Zusätzen zu der Dämmplatte konfektioniert. Kumulativ oder alternativ kann das Bindemittel zur Erstellung der Dämmplatte ein Hydrophobierungsmittel aufweisen, so dass die Dämmplatte über ihr Volumen hydrophobiert ist. Das Hydrophobierungsmittel kann ein Eindringen von Feuchtigkeit in die Körner aus expandiertem Perlit der Dämmplatte verhindern oder zumindest stark verringern, was sich positiv auf die Witterungsbeständigkeit der Dämmplatte und damit des Sandwichelementes auswirkt. Hydrophobierungsmittel können beispielsweise Wachs, Silikon, bevorzugt in Form von Silikonöl, Natrium-Oleat oder Mischungen dieser Stoffe sein.

Bei dem abgebundenen Bindemittel, in das die Körner aus expandiertem Perlit eingebettet sind, handelt es sich bevorzugt um ein anorganisches Bindemittel, insbesondere um ein silikatisches Bindemittel, besonders bevorzugt um ein Bindemittel auf Basis von Kieselsol. Neben der Binderkomponente, insbesondere also Kieselsol, kann das Bindemittel weitere Komponenten umfassen, insbesondere Verdicker, bevorzugt Verdicker im Form von Stärke. Verdicker kann beispielsweise in Anteilen im Bereich zwischen 1 und 10 Gew.-%, bezogen auf die Gesamtmasse des Bindemittels, im Bindemittel vorliegen.

Der Anteil an Bindemittel in der Dämmplatte liegt insbesondere bei ≥ 10 Gew.-%, besonders bevorzugt bei ≥ 15 oder ≥ 18 Gew.-%, und ferner insbesondere bei ≤ 30 Gew.-%, besonders bevorzugt bei ≤ 25 oder ≤ 22 Gew.-% (jeweils bezogen auf die Gesamtmasse der Dämmplatte).

Eine wie vorstehend konfektionierte Dämmplatte auf Basis von expandiertem Perlit ist nicht brennbar und kann der Baustoffklasse A1 zugehören (insbesondere gemäß DIN EN 13501-1 Ausgabe Januar 2010).

Insbesondere kann eine wie vorstehend konfektionierte Dämmplatte auf Basis von expandiertem Perlit auch hervorragende Wärmedämmwerte aufweisen. Bevorzugt liegt die Wärmeleitfähigkeit der Dämmplatte auf Basis von expandiertem Perlit unter 0,1 W/mK, bevorzugt unter 0,08 W/mK, unter 0,06 W/mK und besonders bevorzugt unter 0,05 W/mK.

Insbesondere kann die Wärmeleitfähigkeit der Dämmplatte auf Basis von expandiertem Perlit im Bereich von 0,035 bis 0,05 W/mK liegen (Wärmeleitfähigkeit jeweils insbesondere gemäß EN 12667:2001-05).

Die Trockenrohdichte der Dämmplatte auf Basis von expandiertem Perlit liegt bevorzugt unter 200 kg/m³, besonders bevorzugt unter 150 kg/m³, noch bevorzugter unter 120 kg/m³. Besonders bevorzugt liegt die Trockenrohdichte der Dämmplatte im Bereich von 80 bis 120 kg/m³ (Trockenrohdichte jeweils insbesondere gemäß EN 1602:1996-11).

Die Wasserdampf-Diffusionswiderstandszahl der Dämmplatte auf Basis von expandiertem Perlit liegt bevorzugt im Bereich zwischen µ=5 bis µ=6 (insbesondere gemäß EN 12086:1997-06).

Die Wasseraufnahme der Dämmplatte auf Basis von expandiertem Perlit bei kurzzeitigem, teilweisem Eintauchen liegt bevorzugt unter 0,5 kg/m² (insbesondere gemäß EN 1609:1996-11).

Trotz geringer Wärmeleitfähigkeit und geringer Trockenrohdichte kann die Dämmplatte auf Basis von expandiertem Perlit hervorragende Festigkeitswerte aufweisen, beispielsweise eine Zugfestigkeit senkrecht zur Plattenebene ≥ 50 kPa, also beispielsweise auch eine Zugfestigkeit ≥ 60 kPa, ≥ 70 kPa oder ≥ 80 kPa (insbesondere gemäß EN 13169:2001-05), eine Druckfestigkeit ≥ 100 kPa, also beispielsweise auch eine Druckfestigkeit ≥ 150 kPa, ≥ 180 kPa oder ≥ 200 kPa (insbesondere gemäß EN 826:1996-05) und eine Biegefestigkeit ≥ 80 kPa, also beispielsweise auch eine Biegefestigkeit ≥100kPa, ≥120 kPa oder ≥130 kPa (insbesondere gemäß EN 12089:1997-06).

Die Dicke der Dämmplatte auf Basis von expandiertem Perlit liegt bevorzugt bei ≥ 20 mm, also beispielsweise auch bei ≥ 30 mm, ≥ 40 mm oder ≥ 50 mm und ferner bevorzugt bei ≤ 300 mm, also beispielsweise auch bei ≤ 250 mm oder ≤ 200 mm.

Die Dämmplatte auf Basis von expandiertem Perlit weist zwei gegenüberliegende Hauptoberflächen, also große Seitenflächen auf. An einer dieser beiden Hauptoberflächen ist die Dämmplatte über den Kleber mit der ersten Trockenbauplatte und an der zweiten Hauptoberfläche über den Kleber mit der zweiten Trockenbauplatte verklebt.

Der Kleber hat die Aufgabe, einen festen Verbund zwischen der Dämmplatte und dem ersten Trockenbauelement einerseits und der Dämmplatte und dem zweiten Trockenbauelement andererseits zu schaffen.

Als Kleber können grundsätzlich beliebige Kleber vorgesehen sein, beispielsweise organische Kleber, mineralische Kleber oder eine Kombination dieser Kleber.

Als organische Kleber können insbesondere Kleber auf Basis von Polyurethan (PU) vorgesehen sein, bevorzugt 2-Komponenten PU-Kleber.

Bevorzugt sind als Kleber mineralische Kleber vorgesehen. Mineralische Kleber haben den wesentlichen Vorteil, dass diese nicht brennbar sind und insbesondere der Baustoffklasse A1 zuordenbar sein können (insbesondere gemäß DIN EN 13501-1 Ausgabe Januar 2010).

Bevorzugt handelt es sich bei mineralischen Klebern um Kleber auf Basis eines anorganischen Bindemittels.

Nach einer bevorzugten Ausführungsform ist ein mineralischer Kleber in Form eines Fliesenklebers oder eines Dichtschlammes vorgesehen.

Besonders bevorzugt ist ein Fliesenkleber in Form eines Zementklebers vorgesehen. Ein Fliesenkleber in Form eines Zementklebers sowie ein Fliesenkleber in Form eines Dichtschlammes können insbesondere auf Portlandzementbasis vorgesehen sein. In diesem Sinne kann es sich bei dem mineralischen Kleber um einen Mörtel auf Portlandzementbasis handeln.

Bevorzugt ist der Kleber dünn aufgetragen. Die Dicke der Kleberschicht zwischen Dämmplatte und der ersten und zweiten Trockenbauplatte liegt bevorzugt jeweils unter 3 mm, besonders bevorzugt unter 1 mm.

Bevorzugt ist die Dämmplatte auf Basis von expandiertem Perlit vollständig oder zumindest weitgehend beidseitig an ihren beiden Hauptoberflächen durch die erste und die zweite Trockenbauplatte abgedeckt.

Randseitig kann die Dämmplatte bündig mit der ersten und zweiten Trockenbauplatte abschließen.

Alternativ kann vorgesehen sein, dass das Sandwichelement randseitig strukturiert ausgebildet ist. Beispielsweise kann das Sandwichelement randseitig gestuft, mit einer Falz oder mit Nut-/Federelementen ausgebildet sein. Dies erleichtert die Ausrichtung benachbarter Sandwichelemente gegeneinander. Außerdem wird hierdurch eine Verschiebung von gegeneinander angeordneten Sandwichelementen, insbesondere senkrecht zur deren Hauptoberflächen, unterdrückt.

Das erfindungsgemäße Sandwichelement ist bevorzugt im wesentlichen plattenförmig gestaltet und weist bevorzugt die Form einer rechteckigen Platte (also eines "dünnen" Quaders) auf. Die beiden Hauptoberflächen dieser Platte werden durch die jeweils außenliegende Hauptoberfläche der ersten und zweiten Trockenbauplatte gebildet.

Das Sandwichelement kann Öffnungen aufweisen, beispielsweise für Türen oder Fenster. Das Sandwichelement kann beispielsweise auch innere Kanalstrukturen aufweisen, beispielsweise für Leitungen oder Rohre.

Erfindungsgemäß ist ein Sandwichelement in Form eines wandhohen Elementes vorgesehen, also mit einer Länge, die einer Wandhöhe entspricht. Entsprechend kann das Sandwichelement beispielsweise eine Länge (Höhe) im Bereich von 2.000 bis 5.000 mm, bevorzugt im Bereich von 2.300 bis 4.000 mm aufweisen.

Die Breite des Sandwichelementes liegt bevorzugt im Bereich von 600 bis 1.800 mm, besonders bevorzugt im Bereich von 900 bis 1.250 mm.

Die Dicke des Sandwichelementes kann im Bereich von 40 bis 400 mm liegen, bevorzugt im Bereich von 60 bis 325 mm.

Das Sandwichelement ist als tragendes Element für den Gebäudebau vorgesehen. Insbesondere kann das erfindungsgemäße Sandwichelement beispielsweise zur Erstellung von Wänden und/oder Decken von Gebäuden, insbesondere beispielsweise Fertighäusern vorgesehen sein. Das Sandwichelement kann auch als eine später in ein Gebäude einzuziehende Wand verwendet werden. Ferner kann das Sandwichelement beispielsweise als abgehängtes Wandelement verwendet werden.

Das erfindungsgemäße Sandwichelement als solches ist ohne weitere Komponenten als Decken- oder Wandelement für den Gebäudebau verwendbar. Es muss daher nicht mit weiteren Elementen, insbesondere beispielsweise weiteren Platten oder Beschichtungen versehen werden. Das erfindungsgemäße Sandwichelement ist als selbsttragendes, eigenständiges Bauelement konfektioniert und als solches transportierbar und marktfähig.

Insbesondere aufgrund der oben genannten Eigenstabilität der Dämmplatte auf Basis von expandiertem Perlit ist es nicht notwendig, die erste und zweite Trockenbauplatte über sonstige Befestigungsmittel, wie beispielsweise Schrauben oder Klammern, miteinander zu verbinden. Insbesondere kann demnach vorgesehen sein, dass die Dämmplatte auf Basis von expandiertem Perlit durchgehend ist, also nicht beispielsweise durch metallische Befestigungsmittel, die als Wärmebrücken dienen und die Dämmeigenschaften des Sandwichelementes daher verschlechtern könnten, unterbrochen ist. Nach einer Fortbildung dieses Erfindungsgedankens kann vorgesehen sein, dass das erfindungsgemäße Sandwichelement keinerlei metallische Komponenten aufweist.

Das erfindungsgemäße Sandwichelement weist hervorragende Wärmedämmeigenschaften auf. Der Wärmedurchgangskoeffizient eines Sandwichelementes mit einer Dicke von 225 mm kann beispielsweise im Bereich von 0,18 bis 0,26 W/m²K, insbesondere im Bereich von 0,20 bis 0,24 W/m²K liegen (insbesondere gemäß EN ISO=6946:2007). Dabei sinkt der Wärmedurchgangskoeffizient in dem Maße, in dem die Dicke des Elementes zunimmt und steigt in dem Maße, in dem die Dicke des Sandwichelementes abnimmt. Ein Sandwichelement mit einer Dicke von 112,5 mm kann demnach einen Wärmedurchgangskoeffizienten im Bereich von 0,40 bis 0,48 W/m²K, insbesondere im Bereich von 0,42 bis 0,46 W/m²K aufweisen.

Das erfindungsgemäße Sandwichelement kann bei den folgenden Dicken beispielsweise die folgenden Wärmedurchgangskoeffizienten aufweisen (insbesondere gemäß EN ISO=6946:2007):

| Dicke des Sandwichelementes [mm] im Bereich von | Wärmedurchgangskoeffizient [W/m²K] im Bereich von |
|---|---|
| 155 bis 175 | 0,26 bis 0,34, insbesondere 0,28 bis 0,32 |
| 175 bis 195 | 0,24 bis 0,32, insbesondere 0,26 bis 0,30 |
| 195 bis 215 | 0,20 bis 0,28, insbesondere 0,22 bis 0,26 |
| 215 bis 225 | 0,18 bis 0,26, insbesondere 0,20 bis 0,24 |

Das erfindungsgemäße Sandwichelement zeichnet sich durch hervorragende Festigkeitswerte aus. So kann die Höhe der durch das Sandwichelement aufnehmbaren Schubspannung bei ≥ 0,05 N/mm², also auch bei ≥ 0,06 N/mm², ≥ 0,07 N/mm², ≥ 0,075 N/mm² oder sogar bei ≥ 0,08 N/mm² liegen (insbesondere entsprechend DIN EN 14509:2006).

Gegenstand der Erfindung ist ferner ein Verfahren zur Erstellung eines Sandwichelement für den Gebäudebau gemäß Anspruch 5.

Insbesondere kann das Verfahren zur Erstellung des vorbeschriebenen Sandwichelementes dienen.

Die für das Sandwichelement vorbeschriebenen Ausführungen gelten für das nach dem erfindungsgemäßen Verfahren zu erstellende Sandwichelement entsprechend.

Auch insoweit gelten die für das Sandwichelement vorbeschriebenen Ausführungen entsprechend.

Ein Ausführungsbeispiel eines Sandwichelements, das allerdings nicht vom Umfang der Patentansprüche erfasst wird, wird anhand der nachfolgenden Figurenbeschreibung näher erläutert.

### Dabei zeigt

- Figur 1: ein Sandwichelement in einer perspektivischen Ansicht schräg von der Seite und in und

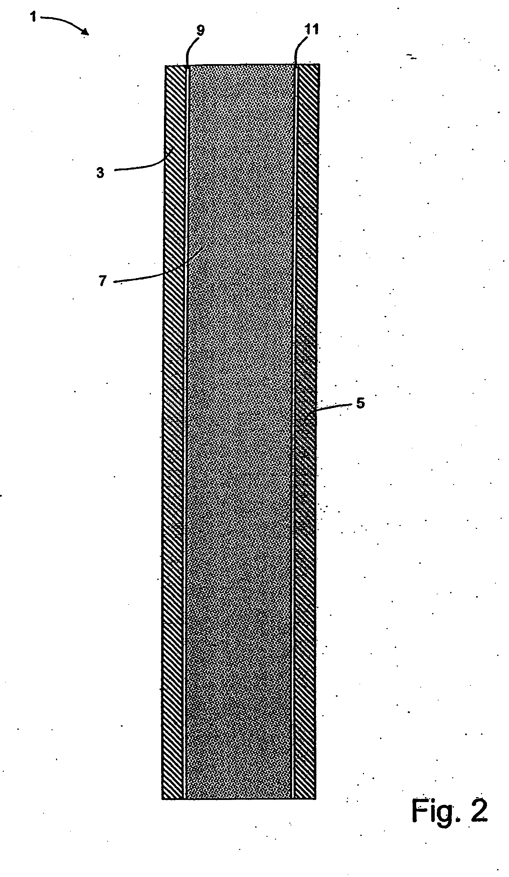

- Figur 2: das Sandwichelement gemäß Figur 1 in einer seitlichen Schnittansicht.

Das in dem Ausführungsbeispiel dargestellte Sandwichelement 1 hat die Form einer rechteckigen Platte beziehungsweise eines Quaders. Die Breite b des Sandwichelementes 1 beträgt 900 mm und die Höhe h des Sandwichelementes 1 beträgt 2.500 mm. Die Dicke d des Sandwichelementes 1 beträgt 225 mm.

Das Sandwichelement 1 weist einen Kern in Form einer Dämmplatte 7 auf Basis von expandiertem Perlit auf. Die Dämmplatte 7 besteht aus Körnern aus expandiertem Perlit in einer Körnung von 0,1 bis 1,5 mm, die über ein abgebundenes Bindemittel verbunden sind; das Bindemittel besteht aus einer Mischung aus Kieselsol und Stärke sowie aus einem Hydrophobierungsmittel, mittels dessen die Dämmplatte 7 über ihr gesamtes Volumen hydrophobiert. Das Mischungsverhältnis von Perlit zu Bindemittel beträgt 80:20 (bezogen auf die Masse). Die Dämmplatte 7 weist eine Trockenrohdichte von 100 kg/m³ (gemäß EN 1602:1996-11) und eine Wärmeleitfähigkeit in Höhe von 0,045 W/mK (gemäß EN 12667:2001-05) auf. Die Dicke (d₂) der Dämmplatte 7 beträgt 199 mm. Die Wasserdampf-Diffusionswiderstandszahl der Dämmplatte 7 liegt bei µ=5 (gemäß EN 12086:1997-06), die Wasseraufnahme bei kurzzeitigem, teilweisem Eintauchen bei 0,4 kg/m² (gemäß EN 1609:1996-11), die Zugfestigkeit senkrecht zur Plattenebene bei 80 kPa (gemäß EN 13169:2001-05), die Druckfestigkeit bei 200 kPa (gemäß EN 826:1996-05) und die Biegefestigkeit bei 130 kPa (gemäß EN 12089:1997-06).

Über einen mineralischen Kleber 11 in Form eines Fliesenklebers auf Basis von Portlandzement ist die Dämmplatte 7 auf einer ihrer beiden Hauptoberflächen mit einer ersten Trockenbauplatte in Form einer Hartgipsplatte 5 verklebt. Der mineralische Kleber 11 ist in einer Stärke von etwa 0,5 mm aufgetragen.

Die Hartgipsplatte 5 weist eine Dicke (d₃) von 12,5 mm und eine Wärmeleitfähigkeit von 0,25 W/mK auf (gemäß EN 12524:2000).

Die Hartgipsplatte 5 (Typ DFH2IR gemäß DIN EN 520:2004 + A1:2009) ist nicht brennbar und gehört zur Baustoffklasse A1 (gemäß DIN EN 13501-1 Ausgabe Januar 2010).

Auf ihrer zweiten Hauptoberfläche ist die Dämmplatte 7 über einen Fliesenkleber 9 mit einer zweiten Trockenbauplatte in Form einer Zementbauplatte 3 verklebt. Der Fliesenkleber 9 entspricht in seiner Zusammensetzung und in der Art seines Auftrages dem Fliesenkleber 11 auf der anderen Hauptoberfläche der Dämmplatte 7.

Die Zementbauplatte 3 besteht aus abgebundenem Portlandzement, in den mineralische Zuschlagstoffe eingebunden sind. Im Bereich der Oberfläche ist allseitig ein Glasgittergewebe in den Portlandzement der Zementbauplatte 3 eingebettet. Die Zementbauplatte 3 weist eine Dicke (d₁) von 12,5 mm, eine Rohdichte (trocken) von 1.150 kg/m³ (gemäß EN 1602:1996-11) eine Biegefestigkeit von 9,60 MPa (gemäß EN 12467 Ausgabe Dezember 2006) sowie eine Wärmeleitfähigkeit von 0,35 W/mK (gemäß EN 12664:2001-05) auf. Die Zementbauplatte 3 ist nicht brennbar und gehört der Baustoffklasse A1 an (gemäß EN 13501-1 Ausgabe Januar 2010).

Die Dämmplatte 7, die Hartgipsplatte 5 sowie die Zementbauplatte 3 weisen jeweils eine Breite von 900 mm und eine Höhe von 2.500 mm auf und schließen im Bereich ihrer Außenkanten bündig aneinander an. Das Sandwichelement 1 weist damit insgesamt die Form eines Quaders auf.

Trotz eines geringen Flächengesichtes von nur etwa 43,5 kg/m² weist das Sandwichelement 1 hervorragende Festigkeits- und Dämmwerte auf.

Die aufnehmbare Schubspannung des Sandwichelementes 1 beträgt 0,08 N/mm² (gemäß DIN EN 14509:2006)

Der Wärmedurchgangskoeffizient des Sandwichelementes 1 beträgt 0,22 W/m²K (gemäß EN ISO=6946:2007).

Das Sandwichelement 1 kann insbesondere im Fertig-Gebäudebau als wandhohes Fertigteil als tragendes oder nicht tragendes Bauelement verwendet werden.

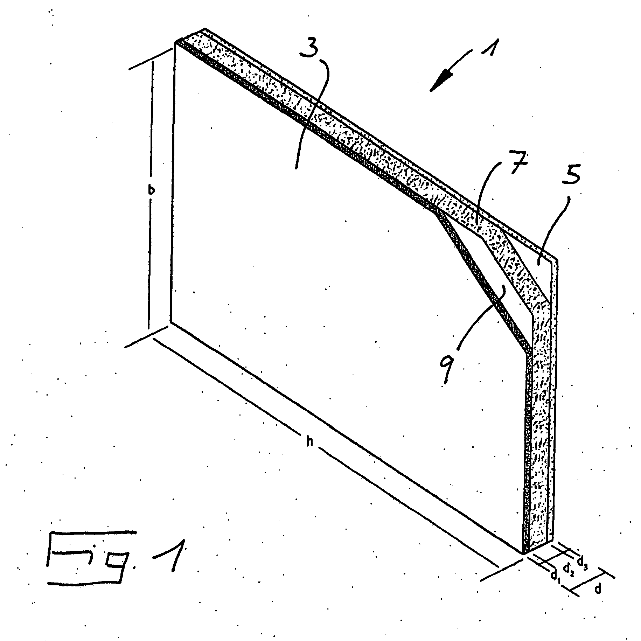

In der Darstellung des Sandwichelementes 1 gemäß Figur 1 sind, um die inneren Strukturen des Sandwichelementes 1 besser erkennbar zu machen, Teile des Dämmelementes 7 sowie der Zementbauplatte 3 entfernt.

## Patentansprüche

1. Sandwichelemente in Form eines wandhohen, tragenden Elementes für den Gebäudebau mit folgenden Merkmalen:
1.1 einer ersten Trockenbauplatte (5) in Form einer Zementbauplatte,
1.2 einer zweiten Trockenbauplatte (3) in Form einer Zementbauplatte und
1.3 einer zwischen der ersten und der zweiten Trockenbauplatte (3, 5) angeordneten Dämmplatte (7) auf Basis von expandiertem Perlit, wobei
1.4 die erste und die zweite Trockenbauplatte (3, 5) über einen Kleber (9, 11) mit der Dämmplatte (7) verklebt sind, **dadurch gekennzeichnet, dass**
1.5 die erste Trockenbauplatte (5) im Bereich ihrer Oberfläche durch ein Glasgittergewebe armiert ist, und eine Biegezugfestigkeit von wenigstens 5 MPa und eine Dicke im Bereich von 6 bis 20 mm aufweist.

2. Sandwichelement nach Anspruch 1 mit einer Dämmplatte (7) auf Basis von expandiertem Perlit in Form von Körnern aus expandiertem Perlit die über ein abgebundenes anorganisches Bindemittel miteinander verbunden sind.

3. Sandwichelement nach Anspruch 1 mit einem Kleber (9, 11) in Form eines mineralischen Klebers.

4. Sandwichelement nach Anspruch 1 mit einem Kleber (9, 11) in Form eines Fliesenklebers oder eines Dichtschlammes.

5. Verfahren zur Erstellung eines Sandwichelementes als wandhohes, tragendes Element für den Gebäudebau mit folgenden Merkmalen:
5.1 zur Verfügungstellung einer ersten Trockenbauplatte in Form einer Zementbauplatte,
5.2 einer zweiten Trockenbauplatte in Form einer Zementbauplatte und
5.3 einer Dämmplatte auf Basis von expandiertem Perlit mit zwei gegenüberliegenden Hauptoberflächen, wobei
5.4 die Dämmplatte an ihrer einen Hauptoberfläche mit der ersten Trockenbauplatte und an ihrer anderen Hauptoberfläche mit der zweiten Trockenbauplatte über einen Kleber verklebt wird, **dadurch gekennzeichnet, dass**
5.5 die erste Trockenbauplatte (5) im Bereich ihrer Oberfläche durch ein Glasgittergewebe armiert ist, und eine Biegezugfestigkeit von wenigstens 5 MPa und eine Dicke im Bereich von 6 bis 20 mm aufweist.

## Claims

1. A sandwich element in the form of a wall-high structural element for building construction, comprising the following characteristics:
1.1 a first dry-build board (5) in the form of a cement board,
1.2 a second dry-build board (3) in the form of a cement board, and
1.3 an insulation panel (7), arranged between the first and the second dry-build boards (3, 5), based on expanded perlite, wherein
1.4 the first and the second dry-build boards (3, 5) are bonded to the insulation panel (7) by way of an adhesive (9, 11),
**characterised in that**
1.5 the first dry-build board (5) in the region of its surface is reinforced by a glass fibre mesh and comprises a bending tension strength of at least 5 MPa and a thickness raging from 6 to 20 mm.

2. The sandwich element according to claim 1 with an insulation panel (7) based on expanded perlite in the form of granules of expanded perlite that are interconnected by means of a cured inorganic binder.

3. The sandwich element according to claim 1 with an adhesive (9, 11) in the form of a mineral adhesive.

4. The sandwich element according to claim 1 with an adhesive (9, 11) in the form of a tile adhesive or a sealer slurry.

5. A method for producing a sandwich element as a wall-high structural element for building construction, comprising the following characteristics:
5.1 provision of a first dry-build board in the form of a cement board,
5.2 a second dry-build board in the form of a cement board, and
5.3 an insulation panel based on expanded perlite with two opposite main surfaces, wherein
5.4 the insulation panel on its one main surface is bonded to the first dry-build board and on its other main surface is bonded to the second dry-build board by means of an adhesive,
**characterised in that**
5.5 the first dry-build board (5) in the region of its surface is reinforced by a glass fibre mesh and comprises a bending tension strength of at least 5 MPa and a thickness ranging from 6 to 20 mm.

## Revendications

1. Elément sandwich sous forme d'un élément porteur à hauteur de mur pour la construction de bâtiments, ayant les caractéristiques suivantes :
1.1 d'une première plaque de construction sèche (5) sous forme d'une plaque de construction en ciment,
1.2 d'une seconde plaque de construction sèche (3) sous forme d'une plaque de construction en ciment et
1.3 d'une plaque isolante (7) à base de perlite expansée disposée entre les première et seconde plaques de construction sèche (3, 5), sachant que
1.4 les première et seconde plaques de construction sèche (3, 5) sont collées à la plaque isolante (7) par un adhésif (9, 11), **caractérisé en ce que**
1.5 la première plaque de construction sèche (5) est armée par un treillis de verre au niveau de sa surface et présente une résistance à la traction par flexion d'au moins 5 MPa et une épaisseur entre 6 et 20 mm.

2. Elément sandwich selon la revendication 1 comprenant une plaque isolante (7) à base de perlite expansée sous forme de grains de perlite expansée qui sont reliés entre eux par un agent liant anorganique durci.

3. Elément sandwich selon la revendication 1 comprenant un adhésif (9, 11) ayant la forme d'un adhésif minéral.

4. Elément sandwich selon la revendication 1 comprenant un adhésif (9, 11) ayant la forme d'un adhésif de carrelage ou d'une pâte d'étanchéité.

5. Procédé de fabrication d'un élément sandwich à hauteur de mur pour la construction de bâtiments, ayant les caractéristiques suivantes :
5.1 pour la mise à disposition, d'une première plaque de construction sèche sous forme d'une plaque de construction en ciment,
5.2 d'une seconde plaque de construction sèche sous forme d'une plaque de construction en ciment et
5.3 d'une plaque isolante à base de perlite expansée comprenant deux surfaces principales opposées, sachant que
5.4 la plaque isolante est collée par un adhésif à la première plaque de construction sèche par une de ses surfaces et est collée par un adhésif à la seconde plaque de construction par son autre surface, **caractérisé en ce que**
5.5 la première plaque de construction sèche (5) est armée par un treillis de verre au niveau de sa surface et présente une résistance à la traction par flexion d'au moins 5 MPa et une épaisseur entre 6 et 20 mm.
